# EUROPÄISCHE PATENTANMELDUNG

(11) **EP 2 159 443 A2**
(43) Veröffentlichungstag der Anmeldung: **03.03.2010**
(21) Anmeldenummer: 09162922.0
(22) Anmeldetag: 17.06.2009
(51) Int. Cl.: F16F 9/14

(54) **Drehschwingungsdämpfer für ein Kraftfahrzeugfahrwerk**

(30) Priorität: 25.06.2008 DE 102008002629
(71) Anmelder: ZF Friedrichshafen AG, 80846 Friedrichshafen (DE)
(72) Erfinder: Förster, Andreas, 97422, Schweinfurt (DE); Gilsdorf, Heinz-Joachim, 97499, Donnersdorf (DE); Heyn, Steffen, 97464, Niederwerrn (DE)

(57) **Zusammenfassung**

Es wird ein Drehschwingungsdämpfer mit einem Gehäuse (1) sowie mit mindestens zwei Kammern (3, 5) in dem Gehäuse (1) vorgestellt. Die Kammern sind über ein Dämpferventil (7) miteinander verbunden, wobei in dem Gehäuse (1) ein Rotor (9) um eine Rotationsachse (11) drehbar gelagert ist, der Flügel (13, 15) aufweist, die infolge der Rotationsbewegung des Rotors (9) das in den Kammern (3, 5) vorhandene Medium mit Schwingungen dämpfender Wirkung verdrängen.

Die Erfindung ist **dadurch gekennzeichnet, dass** das Gehäuse (1) aus zwei Teilen (17, 19, 21) besteht.

## Beschreibung

Die Erfindung betrifft einen Drehschwingungsdämpfer nach dem Oberbegriff des Patentanspruches 1.

Drehschwingungsdämpfer der gattungsgemäßen Art werden insbesondere in Kraftfahrzeugen zur Reduzierung der Übertragung nicht erwünschter Schwingungen verwendet. Hierzu haben sich insbesondere Drehschwingungsdämpfer als vorteilhaft erwiesen, die in einem Gehäuse mindestens zwei Kammern aufweisen, die mit einem Dämpfungsmittel gefüllt sind. Bevorzugt werden als Dämpfungsmittel Flüssigkeiten mit einer definierten Viskosität, wie beispielsweise Öl zum Einsatz gebracht. Das Dämpfungsmittel strömt innerhalb des Drehschwingungsdämpfers über mindestens ein Dämpferventil zwischen den Kammern hin und her, weil sich in dem Gehäuse ein um eine Rotationsachse drehbarer Rotor befindet. Die an dem Rotor vorhandenen Flügel verdrängen das in den Kammern vorhandene Dämpfungsmittel mit Schwingungen dämpfender Wirkung.
Eine derartige Lösung geht beispielsweise aus der DE 10 2005 060 792 A1 hervor. Nachteilig bei den bislang bekannten Drehschvvingungsdämpfern ist jedoch ihr komplexer Aufbau. So bestehen sie grundsätzlich aus einem Gehäusegrundkörper, der zur Montage des Rotors beidseitig mit einem Deckel verschlossen wird, nachdem das Dämpfungsmittel eingefüllt ist. Damit ergibt sich nicht nur eine erhebliche Teilezahl, sondern zudem auch eine erschwerte Montage derartiger Drehschwingungsdämpfer.

Der Erfindung liegt die Aufgabe zugrunde, einen Drehschwingungsdämpfer bereitzustellen, der durch einfache Fertigungsverfahren herstellbar ist und möglichst wenige Bauteile aufweist.

Die Erfindung löst diese Aufgabenstellung mit den Merkmalen des Patentanspruches 1.
Weitere Ausgestaltungen der Erfindung sind in den sich anschließenden Unteransprüchen wiedergegeben.

Ein Drehschwingungsdämpfer mit einem Gehäuse, sowie mit mindestens zwei Kammern in dem Gehäuse, die über ein Dämpferventil miteinander verbunden sind, wobei in dem Gehäuse ein Rotor um eine Rotationsachse drehbar gelagert ist, der Flügel aufweist, die infolge der Rotationsbewegung des Rotors das in den Kammern vorhandene Medium mit Schwingungen dämpfender Wirkung verdrängen, wurde erfindungsgemäß dahingehend weitergebildet, dass das Gehäuse aus zwei Teilen besteht.

Mit der erfindungsgemäßen Lösung konnte die eingangs genannte Aufgabe gelöst und ein Drehschwingungsdämpfer bereitgestellt werden, der eine reduzierte Teilezahl aufweist und zu seiner Montage einen verringerten Aufwand erfordert. Damit steht auch eine ökonomisch herstellbare, fertigungstechnisch einfache Variante zur Verfügung, die folglich kostengünstig erzeugt werden kann.

Das Gehäuse eines erfindungsgemäßen Drehschwingungsdämpfers weist lediglich eine Teilung auf. Entsprechend einer ersten Ausgestaltung der Erfindung ist vorgesehen, dass diese Teilung des Gehäuses eine mit Bezug zur Richtung der Rotationsachse senkrechte, in Richtung der Rotationsachse oder winklig zur Rotationsachse verlaufende Teilung ist. Diese Anordnungsmöglichkeiten der Teilung des Gehäuses führen zu einer fertigungstechnischen Vereinfachung des gesamten Drehschwingungsdämpfers. Die beiden Teile des Gehäuses können jeweils aus einem Stück hergestellt und anschließend im Bereich der Teilung zusammengesetzt werden.

Der in dem Drehschwingungsdämpfer vorhandene Rotor weist Flügel auf, die infolge der Rotationsbewegung des Rotors das in den Kammern vorhandene Medium mit einer Schwingungen dämpfenden Wirkung verdrängen. Diese Flügel liegen an einer Innenwand des Gehäuses an und unterteilen somit einen Kammerhohlraum in zwei einzelne Kammern. Zur Optimierung der Abdichtung ist in diesem Bereich bei bekannten Drehschwingungsdämpfern eine Flügeldichtung in die Flügel des Rotors eingesetzt. Es konnte festgestellt werden, dass es für das Verschleißverhalten dieser Flügeldichtungen nachteilig ist, wenn die Flügel des Rotors und damit auch die Flügeldichtung während der Rotation des Rotors über die Teilung des Gehäuses geführt werden. Dieses Problem stellt sich insbesondere, wenn die Teilung in Richtung der Rotationsachse verläuft. Im Bereich der Teilung des Gehäuses können nämlich die vorhandenen Körperkanten Unebenheiten aufweisen, die selbst im Falle mikroskopisch geringer Größe einen verstärkten Abrieb der Flügeldichtungen erzeugen. Aus diesem Grund wird entsprechend einer weiteren Ausgestaltung der Erfindung vorgeschlagen, dass die Flügel des Rotors eines unbelasteten Drehschwingungsdämpfers in Rotationsrichtung betrachtet einen Winkelversatz zu der in Richtung der Rotationsachse verlaufenden Teilung des Gehäuses aufweisen. Durch eine derartige Weiterbildung der Erfindung kann vermieden werden, dass die Flügeldichtungen des Rotors vorzeitig verschleißen. Damit erhöht sich die Lebensdauer eines derartig ausgestatteten Drehschwingungsdämpfers in entscheidendem Maße.

Eine weitere Vereinfachung der Ausführung eines erfindungsgemäßen Drehschwingungsdämpfers besteht darin, dass die Gehäuseteile identisch ausgeführt sind. Bei der Montage des Drehschwingungsdämpfers werden diese identisch ausgeführten Gehäuseteile beispielsweise spiegelbildlich zueinander montiert. Diese Ausgestaltung der Erfindung hat den Vorteil, dass bei einer Herstellung des Gehäuses mittels eines Gieß- oder Spritzverfahrens nur noch eine Form zur Herstellung der Gehäuseteile erforderlich ist. Damit lässt sich der fertigungstechnische Aufwand reduzieren und der Drehschwingungsdämpfer insgesamt kostengünstig herstellen.

Neben dem Umstand, dass die Gehäuseteile zwei identisch ausgeführte Gehäuseteile sein können, kann alternativ eine andere Ausführungsform darin bestehen, dass das Gehäuse aus einem Gehäusekörper und einem Deckel besteht. Hierfür sind zwar weiterhin zwei Formen zur Herstellung der Einzelteile erforderlich, jedoch ist der Vorteil gegeben, dass gegenüber bekannten Drehschwingungsdämpferausführungen ein Deckel eingespart werden kann, da das Gehäuse insgesamt nur noch mit einem Deckel verschlossen wird. Folglich erfolgt bei einer derartigen Lösung die Montage des Rotors von einer Seite des Gehäuses her. Darüber hinaus können mit dieser Variante zusätzlich Dichtungen eingespart werden, die bei bisher bekannten Drehschwingungsdämpfern innerhalb des zweiten Deckels an dem Kontaktbereich zum Gehäusekörper erforderlich waren.

In besonders vorteilhafter Weise lässt sich das Gehäuse aus Aluminium oder Kunststoff herstellen. Diese Werkstoffe sind einfach zu verarbeiten und weisen erhebliche Vorteile bei der Formgebung auf. Die Gehäuseteile lassen sich somit beispielsweise mittels eines Gießverfahrens, also zum Beispiel durch ein Spritzgießverfahren herstellen. Darüber hinaus bringen Aluminium oder Kunststoff eine entscheidende Gewichtsersparnis gegenüber herkömmlichen Stahl-Werkstoffen mit sich.

Zur optimalen Montage der Gehäuseteile wird ferner vorgeschlagen, dass diese durch Passstifte zueinander positioniert, miteinander verbunden werden. Durch die Passstifte ist eine lagegenaue Montage der Gehäuseteile möglich. Fehlmontagen sind damit wirksam vermeidbar.

Eine Weiterbildung der Erfindung geht ferner dahin, zwischen den Gehäuseteilen eine statische Dichtung vorzusehen. Die statische Dichtung ist keinen Bewegungen ausgesetzt, so dass hier einfache Dichtungen zum Einsatz kommen können, was die für die Herstellung eines erfindungsgemäßen Drehschwingungsdämpfers erforderlichen Kosten reduziert.

Zum Aneinanderfügen der Gehäuseteile ist es von besonderem Vorteil, wenn das Gehäuse Kontaktflächen für die form-, kraft- oder stoffschlüssige Verbindung der Gehäuseteile aufweist. Bevorzugt können diese Kontaktflächen am Gehäuse eine vergrößerte Oberfläche gegenüber dem Gehäusequerschnitt aufweisen, um eine Verbesserung der Anlage der Gehäuseteile aneinander zu erreichen. Dies führt zu einer Vereinfachung der Montage des Drehschwingungsdämpfers, und zwar unabhängig davon, ob die Gehäuseteile miteinander verschraubt, verspannt oder beispielsweise verklebt werden.

Die erwähnte statische Dichtung zwischen den Gehäuseteilen kann in ihrer Wirkung weiter verbessert werden und ist darüber hinaus vereinfacht zu montieren, wenn entsprechend einer vorteilhaften Ausgestaltung der Erfindung das Gehäuse an zumindest einer der Kontaktflächen eine umlaufende Dichtungsnut aufweist. Die statische Dichtung kann in diese Dichtungsnut eingelegt werden. Somit ist gewährleistet, dass infolge der ordnungsgemäßen Anordnung der Dichtung zwischen den Gehäuseteilen keine Leckage-Probleme auftreten.

Eine weitere vorteilhafte Lösung besteht darin, dass das Gehäuse an zumindest einer der Kontaktflächen einen Steg aufweist. Dieser entlang des Umfangs der Kontaktfläche vorzugsweise vollständig umlaufend ausgeführte Steg weist eine ähnliche Funktion wie die Passstifte auf. Er zentriert die Gehäuseteile gegeneinander und ermöglicht somit eine schnellere und vereinfachte Montage. Diese Zentrierungsfunktion ist beispielsweise möglich, wenn auf den Umfang des Gehäuses bezogen und entlang der Kontaktfläche mittels des Steges eine Kompiementärkontur geschaffen wird, die dann bei der Montage der Gehäusehälften ineinander greift. Zudem kann der Steg innerhalb der Dichtungsnut angeordnet sein und somit auch zur Ausrichtung der Dichtung dienen.

Zur Verbesserung der Kontaktierung der beiden Gehäuseteile ist darüber hinaus vorgesehen, dass an zumindest einem der Gehäuseteile der Steg gegenüber der Kontaktfläche geringfügig erhaben ausgeführt ist. Mit dieser Variante lassen sich die Gehäuseteile mit einer Vorspannung montieren, was die Abdichtung verbessert.

Als Dichtelement, das in die Dichtungsnut eingelegt werden kann, ist bevorzugt ein elastomeres Dichtelement vorgesehen. Diese zumeist aus einem Gummi-Werkstoff hergestellten Dichtelemente haben sich in vielfältiger Weise bewährt und können in beliebigen Formen erzeugt werden, so dass damit auch komplizierte Gehäusegeometrien abdichtbar sind.

Eine sehr vorteilhafte weitere Ausgestaltung der Erfindung besteht darin, dass der Rotor zumindest einen Wellenstumpf, bevorzugt jedoch mehrere Wellenstümpfe, aufweist und die Dichtung zwischen den Gehäuseteilen bis an eine zur Abdichtung an jedem Wellenstumpf vorhandene Wellendichtung herangeführt ist. Auf diese Weise können Leckage-Probleme zwischen den verschiedenen Dichtungsbereichen des Gehäuses wirksam vermieden werden.

Darüber hinaus ist eine weitere Verbesserung gegeben, wenn der Rotor zumindest einen Wellenstumpf, bevorzugt jedoch mehrere Wellenstümpfe, aufweist und die Dichtung zwischen den Gehäuseteilen mit einer zur Abdichtung an jedem Wellenstumpf vorhandenen Wellendichtung als einteilige Dichtung ausgeführt ist. Durch diese sehr vorteilhafte Lösung lässt sich vermeiden, dass Dichtungen fehlerhaft montiert werden. Zudem ist die Montage insgesamt vereinfacht, weil für mehrere Funktionen der Abdichtung lediglich eine einzige Dichtung erforderlich ist.

Infolge der Rotationsbewegung erfolgt eine Verdrängung des Dämpfungsmittels zwischen den Kammern des Drehschwingungsdämpfers. Die damit einhergehende Wärmeerzeugung infolge der inneren Reibung des Dämpfungsmittels sollte bei einem erfindungsgemäßen Drehschwingungsdämpfer an die Umgebung abgegeben werden. Hierzu wird die Oberfläche des Gehäuses genutzt, so dass entsprechend einer Weiterbildung der Erfindung vorgeschlagen wird, dass das Gehäuse Kühlrippen und/oder Ausnehmungen an seiner Außenoberfläche aufweist. Diese Kühlrippen und/oder Ausnehmungen lassen sich in einfacher Weise insbesondere dann erzeugen, wenn das Gehäuse aus Kunststoff oder Aluminium durch ein Gussverfahren hergestellt wird. Bei dieser Fertigung sind keine zusätzlichen Arbeitsschritte erforderlich.

Einige bevorzugte Ausführungsformen der Erfindung werden nachfolgend anhand der beigefügten Zeichnung näher erläutert. Die gezeigten Ausführungsbeispiele stellen keine Einschränkung auf die dargestellten Varianten dar, sondern dienen lediglich der Erläuterung des Prinzips der Erfindung. Dabei sind gleiche oder gleichartige Bauteile mit denselben Bezugszeichen benannt.
Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind. In den Figuren werden beispielhaft drei bevorzugte Ausführungsvarianten der Erfindung erläutert, auf die die Erfindung allerdings nicht eingeschränkt ist.

Es zeigen:
- Figur 1:: eine erste Ausführungsform eines Drehschwingungsdämpfers im Schnitt,
- Figur 2:: den Schnittverlauf II-II aus Figur 1,
- Figur 3:: die Ansicht des Drehschwingungsdämpfers in Richtung des Pfeils III in Figur 1,
- Figur 4:: eine perspektivische Ansicht eines Gehäuseteiles der ersten Ausführungsvariante eines Drehschwingungsdämpfers,
- Figur 5:: ein Gehäuseteil eines Drehschwingungsdämpfers in einer ersten Ausführungsvariante als Einzelteil und im Teilschnitt,
- Figur 6:: die Ansicht VI aus Figur 5,
- Figur 7:: eine zweite Ausführungsform eines erfindungsgemäßen Drehschwingungsdämpfers im Schnitt,
- Figur 8:: den Schnittverlauf VIII-VIII aus Figur 7,
- Figur 9:: einen Blick auf das Gehäuse,
- Figur 10:: einen Blick auf eine Gehäusehälfte mit einer eingebrachten Dichtungsnut,
- Figur 11:: die Ansicht XI aus Figur 10,
- Figur 12:: eine perspektivische Ansicht eines Gehäuseteiles nach der zweiten Ausführung eines erfindungsgemäßen Drehschwingungsdämpfers,
- Figur 13:: eine dritte Ausführungsvariante eines erfindungsgemäßen
- Figur 14:: Drehschwingungsdämpfers im Schnitt, den Schnittverlauf XIV-XIV aus Figur 13,
- Figur 15:: die Ansicht XV aus Figur 13,
- Figur 16:: die Ansicht entsprechend Figur 15, jedoch ohne Einbauteile,
- Figur 17:: ein Gehäuseteil der dritten Ausführungsvariante eines erfindungsgemäßen Drehschwingungsdämpfers im Teilschnitt,
- Figur 18:: die Ansicht XVIII aus Figur 17 und
- Figur 19:: eine perspektivische Ansicht eines Gehäuseteils der dritten Ausführungsvariante.

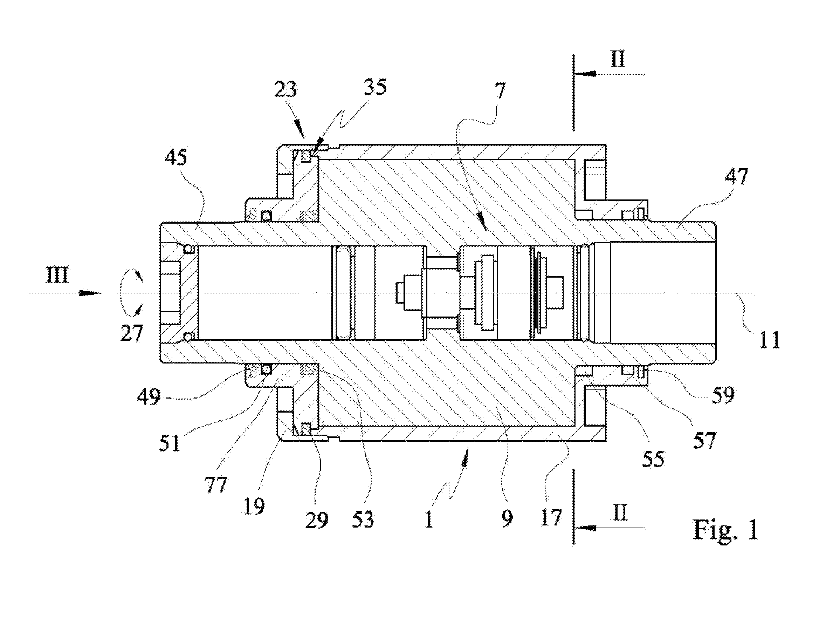

Die in den Figuren 1 bis 6 dargestellte erste Ausführungsvariante eines erfindungsgemäßen Drehschwingungsdämpfers besteht aus einem Gehäuse 1, das im vorliegenden Fall zwei Einzelteile aufweist. Diese Einzelteile sind das Gehäuseteil 17 sowie ein das Gehäuseteil 17 verschließender Deckel im Sinne eines zweiten Gehäuseteils 19. In dem Gehäuse 1 ist ein Rotor 9 drehbar gelagert. Der Rotor 9 kann in beiden Richtungen um eine Rotationsachse 11 rotieren. Die entsprechende Rotationsrichtung 27 ist im linken Bildteil der Figur 1 durch einen Pfeil angedeutet.

Innerhalb des Rotors befindet sich ein insgesamt mit 7 bezeichnetes Dämpferventil, welches in der Figur 1 nur andeutungsweise dargestellt ist. Das Dämpferventil 7 hat die Funktion, das Dämpfungsmittel mit Schwingungen dämpfender Wirkung zwischen in der Figur 1 nicht ersichtlichen Kammern hin- und herzuleiten. Zur Abdichtung der inneren Bauteile eines erfindungsgemäßen Drehschwingungsdämpfers gegenüber der Umgebung kommen unterschiedliche Dichtungen zum Einsatz. So weist der Drehschwingungsdämpfer an seinem Rotor 9 zwei Wellenstümpfe 45 und 47 auf, die durch Wellendichtungen 49, 51 und 53 sowie 55, 57 und 59 abgedichtet sind. Darüber hinaus ist zwischen dem Gehäuseteil 19, welches vorliegend als Deckel ausgeführt wurde, und dem Gehäuseteil 17 eine statische Dichtung 29 vorhanden. Die Wellendichtungen 49, 51, 53, 55, 57 und 59 sind in einem Haltering 77 aufgenommen. Zwischen dem Deckel 19 und dem Gehäuseteil 17 ist eine Kontaktfläche 35 vorhanden, mit der die beiden Teile 19 und 17 des Gehäuses 1 unmittelbar aneinander anliegen. Die Teilung 23 weist bei der in der Figur 1 gezeigten Ausführungsvariante einen zur Rotationsachse 11 senkrechten Verlauf auf.

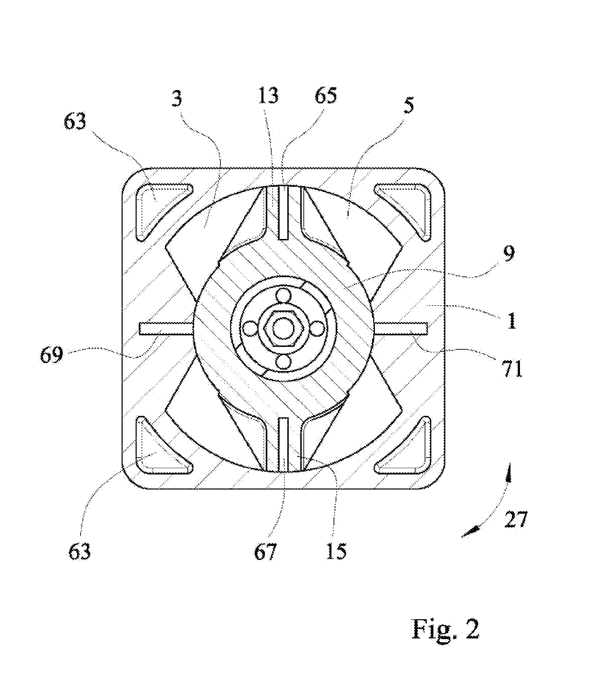

Der Schnittverlauf II-II aus Figur 1 ist in der Darstellung der Figur 2 gezeigt. Aus diesem Schnitt ist der Aufbau des Rotors deutlicher erkennbar, als dies in Figur 1 der Fall war. Der Rotor 9 verfügt demgemäß über zwei einander diametral gegenüberliegend angeordnete Flügel 13 und 15. Im Bereich der Lagerung des Rotors 9 im Gehäuse 1 befinden sich Flügeldichtungen 69 und 71. Weitere Flügeldichtungen 65 und 67 sind in den Flügeln 13 und 15 vorhanden. Diese unterteilen einen Kammerhohlraum in zwei Kammern 3 und 5, in denen sich ein Dämpfungsmittel befindet. Durch die Rotationsbewegung des Rotors 9 um die Rotationsachse 11 wird das Dämpfungsmittel je nach Drehrichtung von einer in die andere Kammer überführt. Die dämpfende Wirkung wird dabei durch das in Zusammenhang mit der Figur 1 bereits erläuterte Dämpferventil 7 verstärkt. Die Rotationsrichtung 27 ist auch in der Figur 2 durch einen Doppelpfeil angedeutet. In dem Gehäuse 1 sind darüber hinaus mehrere Ausnehmungen 63 vorhanden, die zur Gewichtsreduzierung sowie zur Verbesserung der Wärmeabführung des Gehäuses dienen.

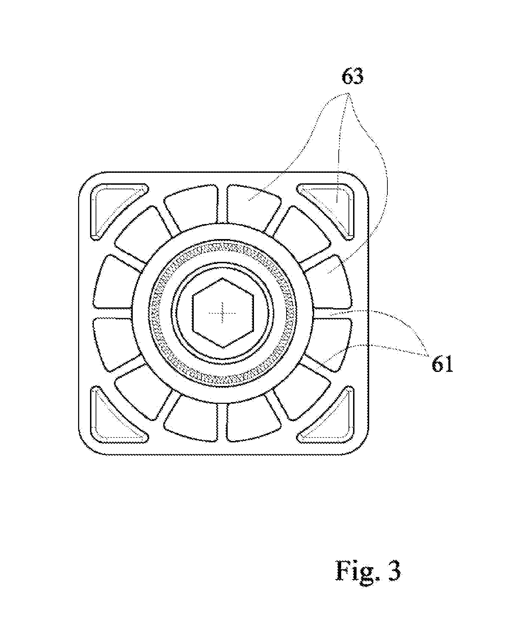

Die Ansicht des Gehäuses 1 in Richtung des Pfeils III aus Figur 1 ist in der Figur 3 zu sehen. Hieraus geht hervor, dass das Gehäuse 1 zahlreiche Ausnehmungen 63 unterschiedlicher Geometrien aufweist und dass zwischen einzelnen Ausnehmungen 63 Kühlrippen 61 vorgesehen sind, die insbesondere zur Ableitung von sich bildender Wärme infolge der Rotation des Rotors dienen.

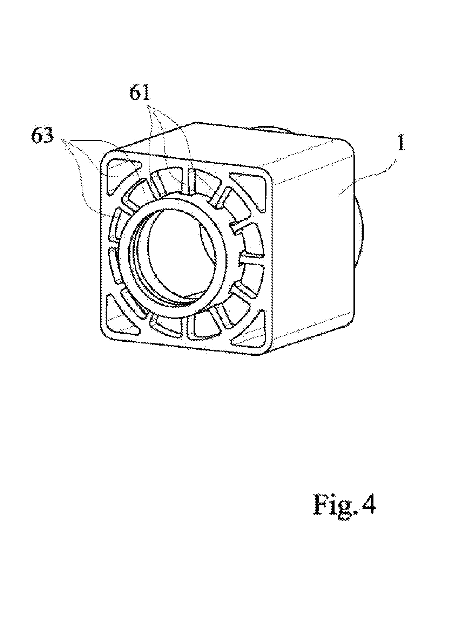

Die Figur 4 zeigt noch einmal anhand der perspektivischen Darstellung des Gehäuses 1, wie die Kühlrippen 61 sowie die unterschiedlichen Ausnehmungen 63 ausgeführt sein können.

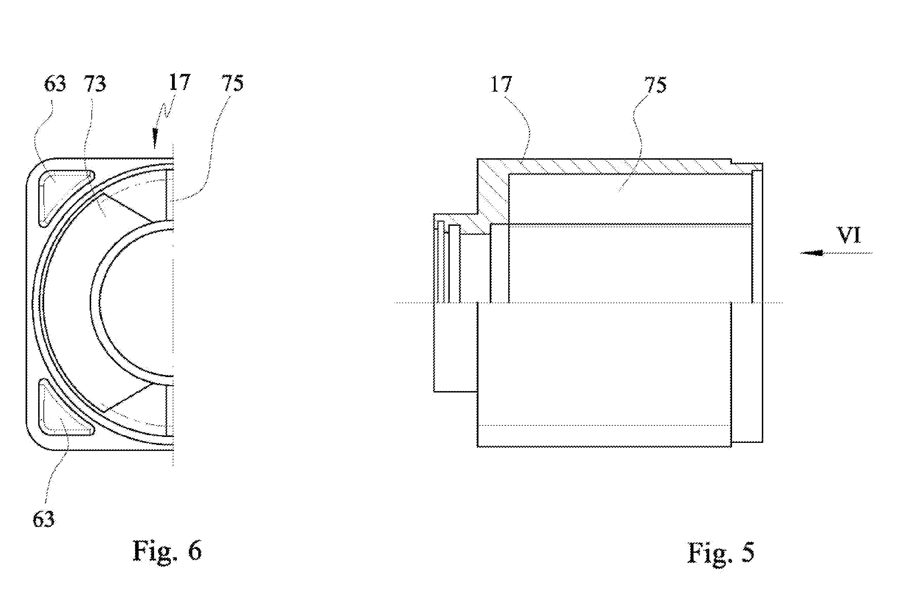

In der Figur 5 ist für das erste Ausführungsbeispiel eines erfindungsgemäßen Drehschwingungsdämpfers das Gehäuseteil 17 als Einzelteil und im Teilschnitt gezeigt. Dieses verfügt über einen Flügeldichtungsschlitz 75, welcher auch in der Figur 6 erkennbar ist.
Darüber hinaus zeigt die Figur 6 in Ergänzung zur Darstellung in Figur 5 einen Kammerhohlraum 73, der durch das Einsetzen des Rotors 9 mit den daran vorhandenen Flügeln 13 und 15 in zwei Kammern 3 und 5 unterteilt wird, wie dies im Zusammenhang mit der Erläuterung der Figur 2 bereits ausgeführt wurde. Ferner sind in der Darstellung der Figur 6 die Ausnehmungen 63 des Gehäuseteiles 17 ersichtlich.

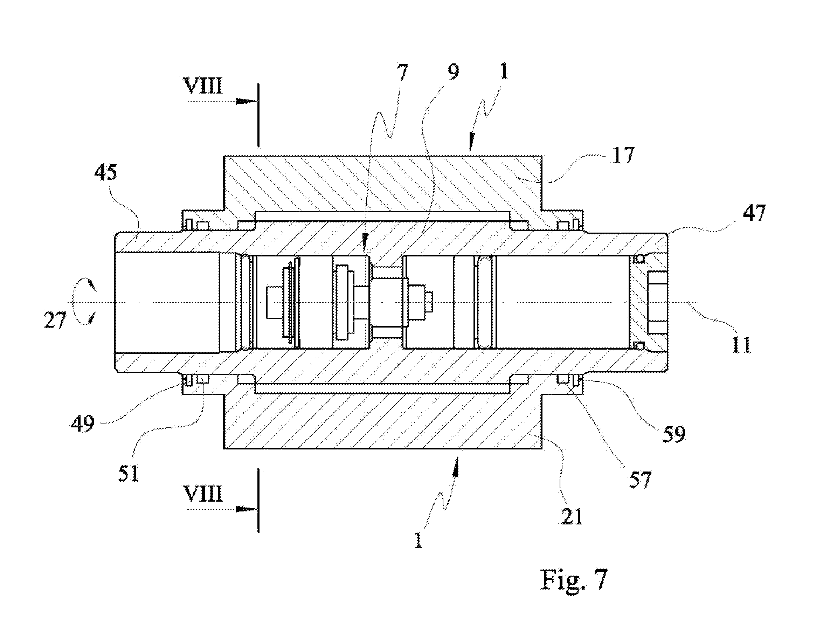

Eine zweite Ausführungsvariante eines erfindungsgemäßen Drehschwingungsdämpfers geht aus den Darstellungen der Figuren 7 bis 12 hervor. Zur Vermeidung von Wiederholungen werden gleiche oder gleichartige Bauelemente nicht noch einmal im Detail beschrieben.
Das in der Figur 7 gezeigte Beispiel eines Drehschwingungsdämpfers verfügt über zwei Gehäuseteile, nämlich ein in der Figur 7 unteres Gehäuseteil 21 und ein oberes Gehäuseteil 17. Die Gehäuseteile 17 und 21 bilden gemeinsam das Gehäuse 1. Die Teilung 25 des Gehäuses 1 liegt bei dieser Ausführungsvariante in einer Ebene mit der Rotationsachse 11. Bei dieser Ausführungsform eines erfindungsgemäßen Drehschwingungsdämpfers ist es von besonderem Vorteil, dass keine Deckel erforderlich sind. Somit handelt es sich um eine besonders einfache Lösung. Zur Abdichtung des rotierenden Rotors 9 gegenüber der Umgebung dienen Wellendichtungen 49, 51, 57 und 59. Hierbei konnte im Vergleich mit der zuvor beschriebenen Ausführungsvariante eines Drehschwingungsdämpfers eine Dichtung eingespart werden. Die Wellendichtungen liegen in Berührungskontakt mit den Wellenstümpfen 45 und 47.

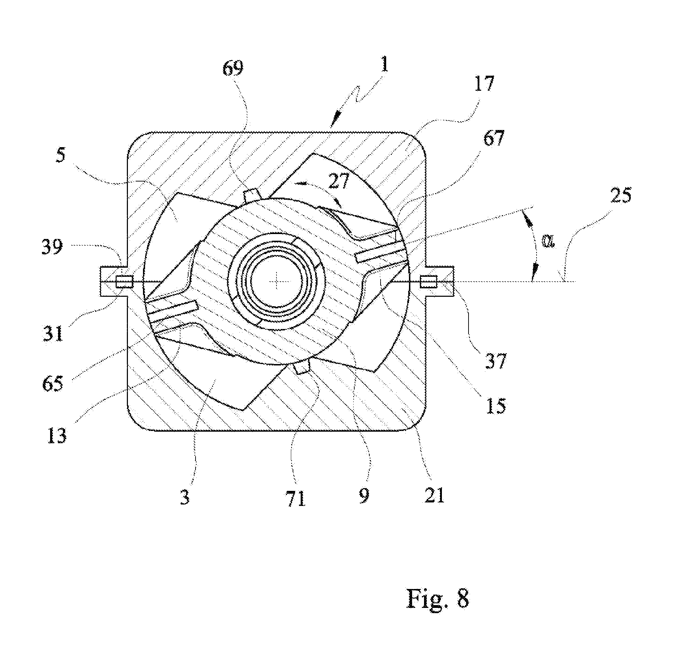

Der Schnittverlauf VIII-VIII in Figur 7 ist in der Figur 8 veranschaulicht. Ein wesentliches Merkmal der Erfindung liegt dabei darin, dass der Rotor 9, der diametral gegenüberliegend zwei Flügel 13 und 15 aufweist, einen Winkelversatz α zu der Teilung 25 des Gehäuses aufweist. Diese spezielle Anordnung des Rotors 9 innerhalb des Gehäuses 1 führt dazu, dass durch die Rotation des Rotors 9 in Rotationsrichtung 27 ein Überstreichen der Teilung 25 durch die in den Flügeln 13 und 15 vorhandenen Flügeldichtungen 65 und 67 nicht oder nur sehr selten erfolgt. Damit kann der Verschleiß der Flügeldichtungen 65 und 57 in erheblichem Maße gegenüber bekannten Ausführungen reduziert werden. Weitere Flügeldichtungen 69 und 71 sind in den Gehäuseteilen 17 beziehungsweise 21 dort vorgesehen, wo der Rotor 9 in dem Gehäuse 1 gelagert ist. Die Gehäuseteile 17 und 21 weisen ferner eine umlaufende Dichtungsnut 39 auf, in die eine Dichtung 31 als statische Dichtung eingelegt ist. Die Dichtungsnut wurde dabei unmittelbar in die Kontaktfläche 37 zwischen den Gehäuseteilen 17 und 21 eingebracht.

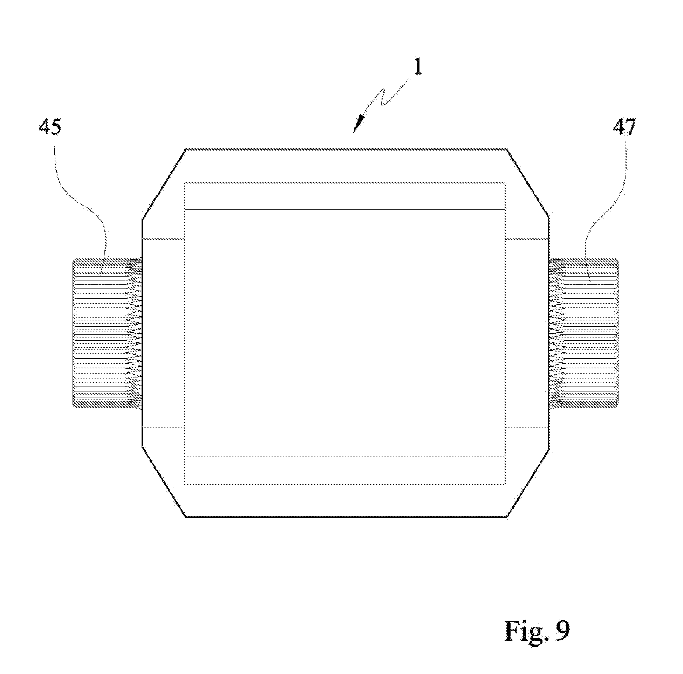

Die Figur 9 zeigt einen Blick auf das Gehäuse 1 der zweiten Ausführungsvariante des erfindungsgemäßen Drehschwingungsdämpfers. Erkennbar werden hierbei die aus dem Gehäuse 1 herausragenden Wellenstümpfe 45 und 47, welche bei dieser Variante zusätzlich mit einer Rändelung zur Drehmomentübertragung versehen sind.

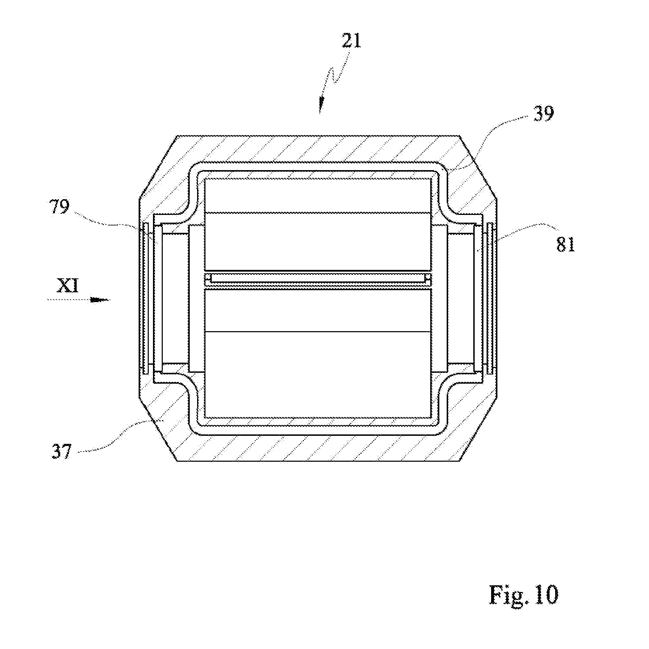

In der Figur 10 ist ferner ein Schnitt entlang der Kontaktfläche 37 des Gehäuseteils 21 dargestellt. Hieraus wird ersichtlich, dass in die Kontaktfläche 37 eine Dichtungsnut 39 eingearbeitet ist. Diese Dichtungsnut 39 reicht dabei bis an die Wellendichtungsnut 79 beziehungsweise 81 des Gehäuseteils 21 heran. Diese erfindungsgemäße Besonderheit ermöglicht es, eine einteilige Dichtung einzusetzen, die aus einer Kombination der statischen Dichtung zwischen den Gehäuseteilen 17 und 21 mit den dynamischen Wellendichtungen zur Abdichtung der Wellenstümpfe 45, 47 des Rotors 9 besteht. Darüber hinaus können die statische Dichtung und die Wellendichtungen auch zweiteilig ausgeführt werden. Bei der Ausführung in Figur 10 würde die statische Dichtung in diesem Fall bis unmittelbar an die Wellendichtung heranreichen, so dass insgesamt mit dieser Ausführungsvariante eine optimierte Abdichtung der inneren Bauteile des Drehschwingungsdämpfers gegenüber der Umgebung gegeben ist.

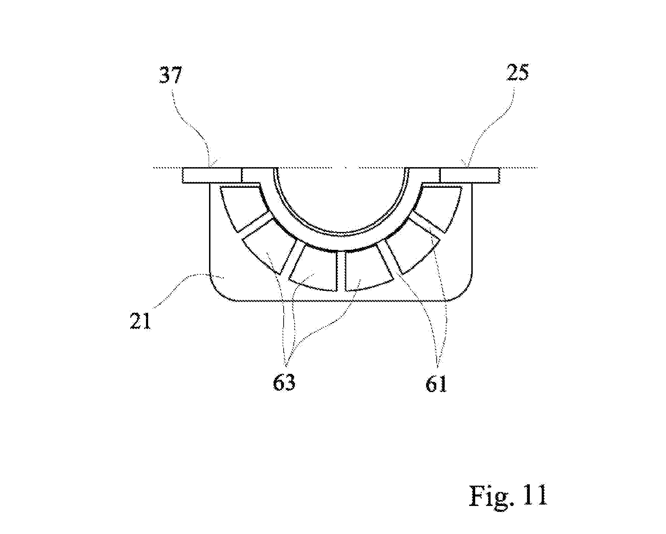

Die Ansicht XI in Figur 10 ist in der Figur 11 dargestellt. Hieraus geht hervor, wie die Teilung 25 an dem Gehäuseteil 21 vorgesehen wird. Sie verläuft in diesem Fall in einer Ebene mit der Kontaktfläche 37 des Gehäuseteils 21. Das Gehäuseteil 21 verfügt ferner über Ausnehmungen 63 sowie Kühlrippen 61. Diese dienen der Gewichtsreduzierung und der verbesserten Abführung von entstehender Wärme innerhalb des Gehäuses.

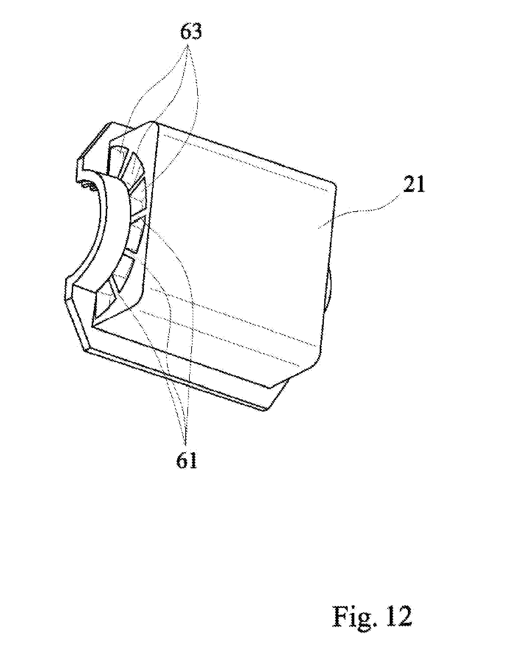

Eine perspektivische Ansicht des Gehäuseteils 21 ist in der Figur 12 gezeigt, hieraus sind die Ausnehmungen 63 sowie die zwischen den Ausnehmungen vorhandenen Kühlrippen 61 in einer räumlichen Ansicht erkennbar.

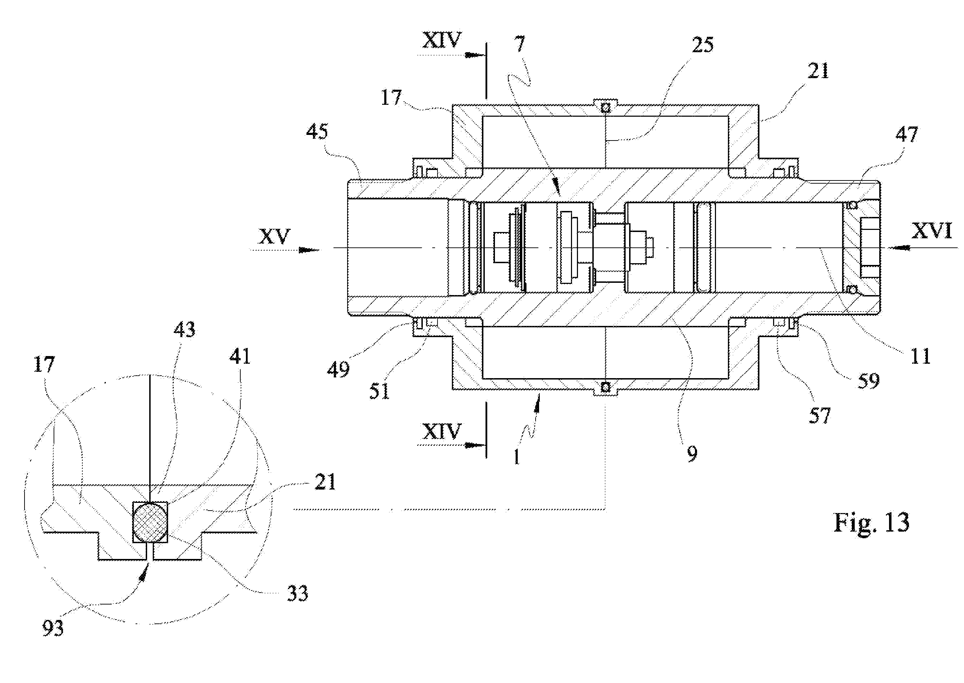

Eine dritte Ausführungsvariante eines erfindungsgemäßen Drehschwingungsdämpfers geht aus den Darstellungen der Figuren 13 bis 19 hervor. Auch hierbei soll nicht auf die baugleichen Bauelemente eingegangen werden, sondern es werden nachfolgend lediglich auf die Unterschiede zu den zuvor beschriebenen Ausführungen eines Drehschwingungsdämpfers erörtert.

Von Bedeutung bei der dritten Variante eines Drehschwingungsdämpfers ist, dass die Teilung 25 hierbei rechtwinklig zur Rotationsachse 11 des Rotors 9 verläuft. Auch hierbei konnten zusätzliche Deckel eingespart werden. Zur Abdichtung der Wellenstümpfe 45 und 47 gegenüber der Umgebung dienen Wellendichtungen 49, 51, 57 und 59. Gegenüber der ersten Ausführungsvariante ist auch hierbei eine Wellendichtung eingespart worden. Das Gehäuse 1 besteht aus zwei Gehäuseteilen 17 und 21, deren im Bild der Figur 13 vertikal dargestellte Teilung 25 zwischen den Gehäuseteilen 17 und 21 eine Kontaktfläche 37 definiert, in die eine umlaufende Dichtungsnut 41 eingebracht ist. Innerhalb der Dichtungsnut 41 befindet sich eine Dichtung 33. Zur Verbesserung der internen Abdichtung ist es vorteilhaft, einen umlaufenden Steg 43 an der Kontaktfläche 37 vorzusehen, der zwischen den Gehäuseteilen 17 und 21 ausgeführt und in der Figur 13 in dem vergrößerten Ausschnitt ersichtlich wird. Bei der in Figur 13 gezeigten Ausführung ist an jedem der Gehäuseteile 17 und 21 jeweils ein Steg 43 vorhanden, da die Gehäuseteile den gleichen Aufbau aufweisen. Die Gehäuseteile 17 und 21 werden durch diese Gestaltung unter einer Vorspannung in Richtung der Rotationsachse 11 zueinander montiert. Dabei bildet sich im montierten Zustand des Gehäuses 1 an dessen Außenmantelfläche ein geringfügiger Spalt 93 aus und die Dichtung 33 wird in der Dichtungsnut 41 deformiert, sodass ihre Dichtwirkung optimiert ist.

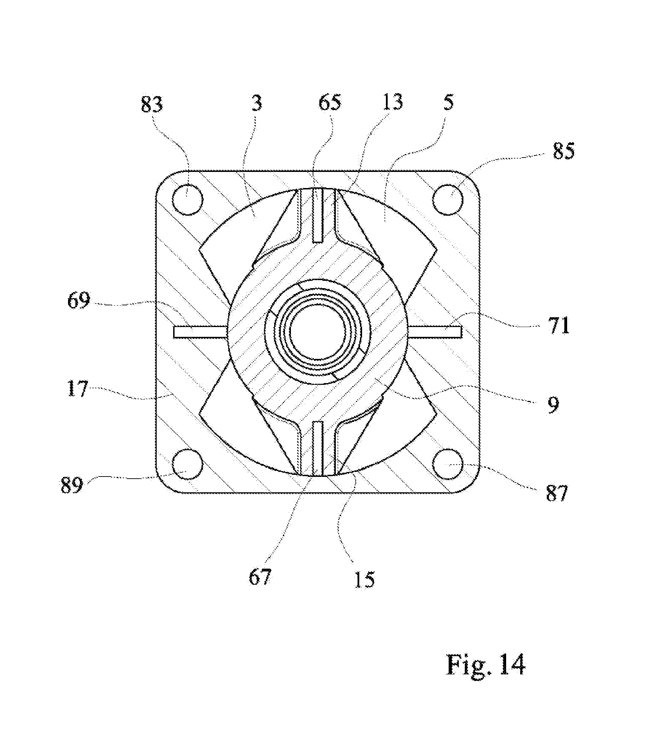

Der Schnittverlauf XIV-XIV ist in der Figur 14 dargestellt. Die Ausführung des Rotors 9 ist analog zu den zuvor bereits beschriebenen Ausführungsvarianten erfindungsgemäßer Drehschwingungsdämpfer. Abweichend zu den vorherigen Ausführungen weist das Gehäuseteil 17 in Figur 14 Montagebohrungen 83, 85, 87 und 89 auf. Mittels dieser Montagebohrungen können die Gehäuseteile 17 und 21 beispielsweise durch eine Schraubverbindung miteinander verbunden werden.

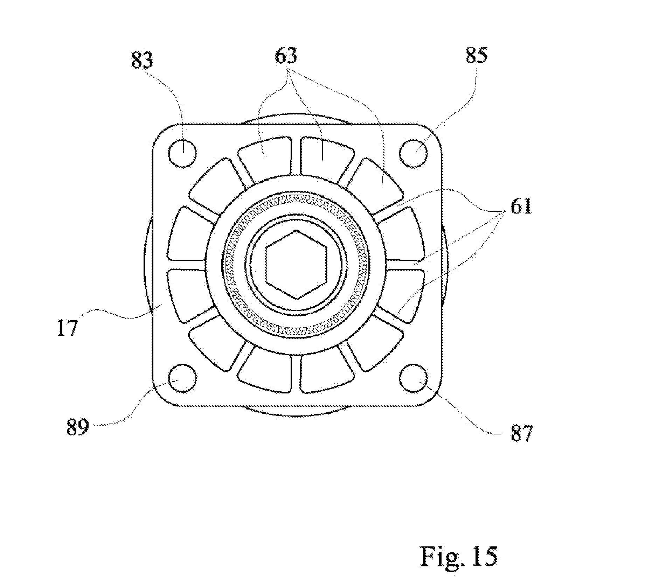

Die Darstellung in Figur 15 zeigt die Ansicht in Richtung des Pfeils XV in Figur 13. Hierbei werden noch einmal die Ausnehmungen 63 sowie die zwischen den Ausnehmungen vorhandenen Kühlrippen 61 des Gehäuseteils 17 deutlich.

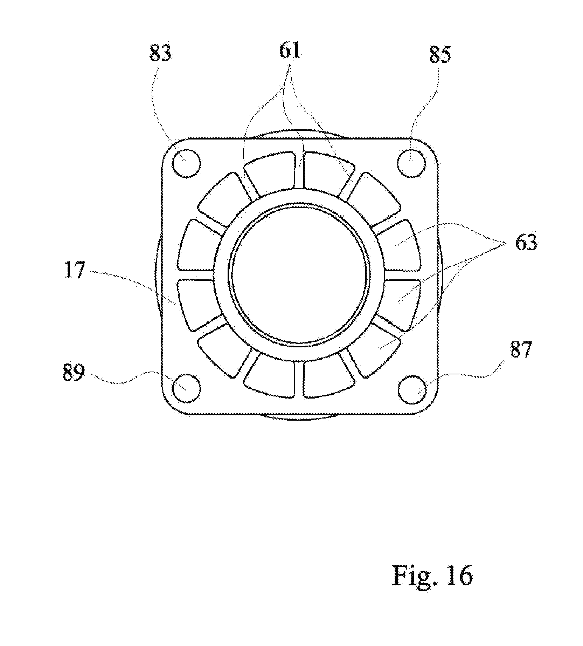

In der Figur 16 ist das in Figur 15 bereits dargestellte Gehäuseteil 17 ohne die dort vorhandenen Einbauten gezeigt.

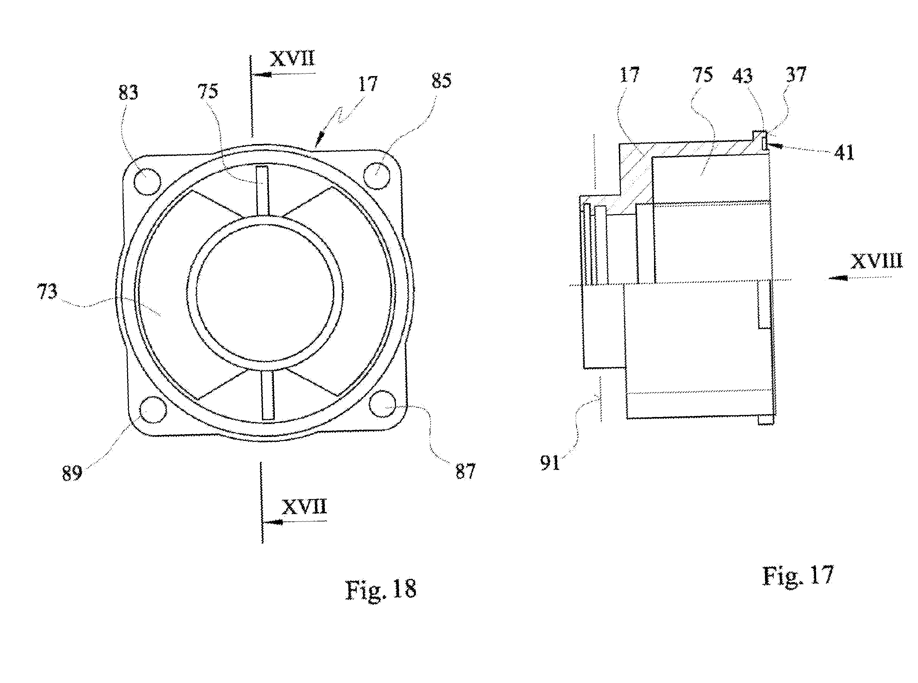

Bei der Figur 17 handelt es sich um einen Teilschnitt durch das Gehäuseteil 17 als Einzelteil. Hieraus wird ersichtlich, dass das Gehäuseteil 17 eine Dichtungsnut 41 aufweist, die sich in der Kontaktfläche 37 des Gehäuseteiles 17 befindet. Oberhalb der Dichtungsnut 41, also an der Innenmantelfläche des Gehäuseteiles 17 gelegen, ist ein Steg 43 vorgesehen. Der Steg 43 wird vorzugsweise umlaufend ausgeführt und verbessert die Montage sowie durch die sich ausbildende Vorspannung die Abdichtung der Gehäuseteile 17 und 21 zueinander. Ferner weist das Gehäuseteil 17 im oberen Bildteil der Figur 17 einen Flügeldichtungsschlitz 75 auf. Das hier als Rohteil gezeigte Gehäuseteil 17 hat eine Trennebene 91, bei der bei dieser speziellen Ausführungsform ein Teil des Stumpfes des Gehäuseteils 17 abgetrennt wird. Die Nuten für die Wellenabdichtungen können spanend nachträglich eingearbeitet sein. Um eine spanende Bearbeitung zu vermeiden, ist es jedoch auch möglich, den I<ompletten Dichtungsbereich für die Wellenstümpfe 45 und 47 getrennt herzustellen und beispielsweise durch eine stoffschlüssige Verbindung oder eine formbeziehungsweise kraftschlüssige Verbindung mit dem Gehäuseteil 17 oder 21 zu verbinden. Gedacht ist hierbei an ein Verkleben oder beispielsweise auch an eine Klemmverbindung mit den Gehäuseteilen 17 und 21.

In der Figur 18 ist die Ansicht in Richtung des Pfeils XVIII in Figur 17 gezeigt. Hier wird der Flügeldichtungsschlitz 75 deutlich, der in der Figur 17 bereits erwähnt wurde. Das Gehäuseteil 17 verfügt ferner über die Montagebohrungen 83, 85, 87 und 89 sowie über einen Kammerhohlraum 73, der später, nach dem Einsetzen des Rotors 9 in das Gehäuseteil 17, von den Flügeln 13 beziehungsweise 15 des Rotors 9 in zwei Kammern 3 und 5 unterteilt wird.

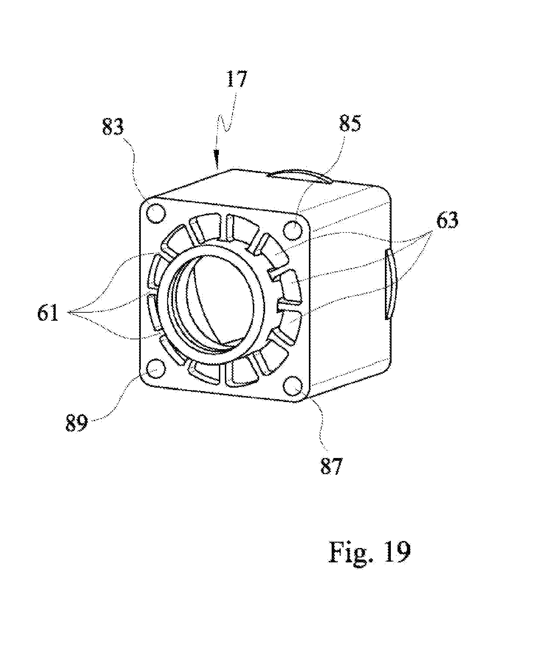

In der Figur 19 ist das Gehäuseteil 17 in perspektivischer Ansicht gezeigt. Hieraus gehen die Ausnehmungen 63 sowie die Kühlrippen 61 in anschaulicher Weise hervor, die zur Kühlung des Gehäuses dienen.

### Bezugszeichenliste:

- 1: Gehäuse
- 3: Kammer
- 5: Kammer
- 7: Dämpferventil
- 9: Rotor
- 11: Rotationsache
- 13: Flügel
- 15: Flügel
- 17: Gehäuseteil
- 19: Gehäuseteil
- 21: Gehäuseteil
- 23: Teilung
- 25: Teilung
- 27: Rotationsrichtung
- 29: Dichtung
- 31: Dichtung
- 33: Dichtung
- 35: Kontaktfläche
- 37: Kontaktfläche
- 39: Dichtungsnut
- 41: Dichtungsnut
- 43: Steg
- 45: Wellenstumpf
- 47: Wellenstumpf
- 49: Wellendichtungen
- 51: Wellendichtungen
- 53: Wellendichtungen
- 55: Wellendichtungen
- 57: Wellendichtungen
- 59: Wellendichtungen
- 61: Kühlrippe
- 63: Ausnehmung
- 65: Flügeldichtung
- 67: Flügeldichtung
- 69: Flügeldichtung
- 71: Flügeldichtung
- 73: Kammerhohlraum
- 75: Flügeldichtungsschlitz
- 77: Haltering
- 79: Wellendichtungsnut
- 81: Wellendichtungsnut
- 83: Montagebohrung
- 85: Montagebohrung
- 87: Montagebohrung
- 89: Montagebohrung
- 91: Trennebene
- 93: Spalt
- α: Winkelversatz

## Patentansprüche

1. Drehschwingungsdämpfer mit einem Gehäuse (1) sowie mit mindestens zwei Kammern (3, 5) in dem Gehäuse (1), die über ein Dämpferventil (7) miteinander verbunden sind, wobei in dem Gehäuse (1) ein Rotor (9) um eine Rotationsachse (11) drehbar gelagert ist, der Flügel (13, 15) aufweist, die infolge der Rotationsbewegung des Rotors (9) das in den Kammern (3, 5) vorhandene Medium mit Schwingungen dämpfender Wirkung verdrängen,
**dadurch gekennzeichnet, dass**
das Gehäuse (1) aus zwei Teilen (17, 19, 21) besteht.

2. Drehschwingungsdämpfer nach Anspruch 1,
**dadurch gekennzeichnet, dass**
das Gehäuse (1) eine in Richtung der Rotationsachse (11) beziehungsweise senkrecht oder unter einem Winkel zur Rotationsachse (11) verlaufende Teilung (23, 25) aufweist.

3. Drehschwingungsdämpfer nach einem der vorstehend genannten Ansprüche,
**dadurch gekennzeichnet, dass**
die Flügel (13, 15) des Rotors (9) eines unbelasteten Drehschwingungsdämpfers in Rotationsrichtung (27) betrachtet einen Winkelversatz (α) zu der in Richtung der Rotationsachse (11) verlaufenden Teilung (23, 25) des Gehäuses (1) aufweisen.

4. Drehschwingungsdämpfer nach einem der Ansprüche 1 bis 3,
**dadurch gekennzeichnet, dass**
die Gehäuseteile (17, 19, 21) identisch ausgeführt sind.

5. Drehschwingungsdämpfer nach einem der Ansprüche 1 bis 3,
**dadurch gekennzeichnet, dass**
das Gehäuse (1) aus einem Gehäusekörper (17) und einem Deckel (19) besteht.

6. Drehschwingungsdämpfer nach einem der vorstehend genannten Ansprüche,
**dadurch gekennzeichnet, dass**
das Gehäuse (1) aus Aluminium oder Kunststoff besteht.

7. Drehschwingungsdämpfer nach einem der vorstehend genannten Ansprüche,
**dadurch gekennzeichnet, dass**
die Gehäuseteile (17, 19, 21) durch Passstifte zueinander positioniert miteinander verbunden sind.

8. Drehschwingungsdämpfer nach einem der vorstehend genannten Ansprüche,
**dadurch gekennzeichnet, dass**
zwischen den Gehäuseteilen (17, 19, 21) eine statische Dichtung (29, 31, 33) angeordnet ist.

9. Drehschwingungsdämpfer nach einem der vorstehend genannten Ansprüche,
**dadurch gekennzeichnet, dass**
das Gehäuse (1) Kontaktflächen (35, 37) für die form-, kraft- oder stoffschlüssige Verbindung der Gehäuseteile (17, 19, 21) aufweist.

10. Drehschwingungsdämpfer nach Anspruch 9,
**dadurch gekennzeichnet, dass**
das Gehäuse (1) an zumindest einer der Kontaktflächen (35, 37) eine umlaufende Dichtungsnut (39, 41) aufweist.

11. Drehschwingungsdämpfer nach Anspruch 9 oder 10,
**dadurch gekennzeichnet, dass**
das Gehäuse (1) an zumindest einer der Kontaktflächen (35, 37) einen Steg (43) aufweist.

12. Drehschwingungsdämpfer nach Anspruch 11,
**dadurch gekennzeichnet, dass**
der Steg (43) entlang des Umfangs der Kontaktfläche (35, 37) des Gehäuses (1) umlaufend ausgeführt ist.

13. Drehschwingungsdämpfer nach einem der Ansprüche 11 oder 12,
**dadurch gekennzeichnet, dass**
der Steg (43) innerhalb der Dichtungsnut (39, 41) angeordnet ist.

14. Drehschwingungsdämpfer nach einem der Ansprüche 11 bis 13,
**dadurch gekennzeichnet, dass**
der Steg (43) gegenüber der Kontaktfläche (35, 37) der miteinander verbundenen Gehäuseteile (17, 19, 21) geringfügig erhaben ausgeführt ist.

15. Drehschwingungsdämpfer nach einem der Ansprüche 10 bis 14,
**dadurch gekennzeichnet, dass**
in die Dichtungsnut (39, 41) ein elastomeres Dichtelement (29, 31, 33) eingelegt ist.

16. Drehschwingungsdämpfer nach einem der Ansprüche 8 bis 15,
**dadurch gekennzeichnet, dass**
der Rotor (9) mindestens einen Wellenstumpf (45, 47) aufweist und die Dichtung (29, 31, 33) zwischen den Gehäuseteilen (17, 19, 21) bis an zumindest eine zur Abdichtung an dem Wellenstumpf (45, 47) vorhandene Wellendichtung (49, 51, 53, 55, 57, 59) herangeführt ist.

17. Drehschwingungsdämpfer nach einem der Ansprüche 8 bis 15,
**dadurch gekennzeichnet, dass**
der Rotor (9) mindestens einen Wellenstumpf (45, 47) aufweist und die Dichtung (29, 31, 33) zwischen den Gehäuseteilen (17, 19, 21) mit zumindest einer zur Abdichtung an dem Wellenstumpf (45, 47) vorhandenen Wellendichtung (49, 51, 53, 55, 57, 59) als einteilige Dichtung ausgeführt ist.

18. Drehschwingungsdämpfer nach einem der vorstehend genannten Ansprüche,
**dadurch gekennzeichnet, dass**
das Gehäuse (1) Kühlrippen (61) und/oder Ausnehmungen (63) an seiner Außenoberfläche aufweist.
